# FASCICULE DE BREVET EUROPEEN

(11) **EP 4 063 262 B1**
(45) Date de publication et mention de la délivrance du brevet: **20.12.2023**
(21) Numéro de dépôt: 22161057.9
(22) Date de dépôt: 09.03.2022
(51) Int. Cl.: B64C 13/50, B64C 13/28, B64C 13/16, B64C 27/04, B64D 31/06, F02C 9/42

(54) **AÉRONEF MULTIMOTEUR MUNI D'UN MODE DE FONCTIONNEMENT ÉCONOMIQUE ET PROCÉDÉ APPLIQUÉ**
MEHRMOTORIGES LUFTFAHRZEUG MIT EINEM SPARSAMEN BETRIEBSMODUS UND ANGEWANDTES VERFAHREN
MULTI-ENGINE AIRCRAFT PROVIDED WITH AN ECONOMIC OPERATING MODE AND METHOD APPLIED

(30) Priorité: 23.03.2021 FR 2102873
(43) Date de publication de la demande: 28.09.2022
(73) Titulaire: Airbus Helicopters, 13725 Marignane Cedex (FR)
(72) Inventeur: CERQUEIRA, Stéphane, 13090 Aix-en-Provence (FR)
(74) Mandataire: GPI Brevets

(56) Documents cités:
- EP-A1- 3 069 990
- EP-A1- 3 095 695
- EP-A1- 3 170 744
- FR-B1- 2 967 133
- US-B2- 10 481 615

## Description

La présente invention concerne un aéronef multimoteur muni d'un mode de fonctionnement économique et le procédé appliqué.

Par exemple, l'aéronef peut comprendre divers organes tournants mis en mouvement par une installation motrice. Ainsi, un aéronef comporte une voilure tournante voire un rotor de contrôle de mouvement en lacet.

Sur un hélicoptère bimoteur, la puissance nécessaire à fournir par l'installation motrice varie en fonction de la vitesse d'avancement. La puissance nécessaire décroit progressivement d'une vitesse d'avancement nulle jusqu'à une vitesse intermédiaire puis augmente progressivement avec l'augmentation de la vitesse d'avancement. Dans une plage de vitesses allant d'une première borne de vitesse inférieure jusqu'à une deuxième borne de vitesse supérieure, la puissance nécessaire pour l'entrainement des organes tournants peut être fournie intégralement par un seul moteur.

Durant un mode de fonctionnement économique, un des moteurs peut alors être mis en veille, à savoir éteint ou mis dans un régime de fonctionnement au ralenti, lorsque l'aéronef se trouve dans cette plage de vitesses pour optimiser la consommation de carburant. Cependant, lorsque la vitesse de l'aéronef décroit et se rapproche de la première vitesse, le moteur en veille doit être réactivé avant que la première vitesse soit atteinte. En raison de la faculté de l'aéronef à décélérer rapidement et du temps nécessaire pour réactiver un moteur, le moteur en veille peut devoir être réactivé à partir d'une vitesse très supérieure à la première vitesse pour être à même de fournir une puissance mécanique. Il en résulte une limitation de l'intérêt du mode de fonctionnement économique.

Le brevet EP 3 209 563 B1 divulgue un mode de fonctionnement économique durant lequel un moteur d'une installation motrice multimoteur développe une puissance très inférieure à une puissance nominale, voire même est éteint en vol. Un système électrotechnique alimenté par le réseau de bord ou par un réseau spécifique d'alimentation en énergie électrique est alors utilisé pour réactiver rapidement ce moteur.

Un tel système est intéressant mais nécessite un système électrotechnique dédié et peut donc avoir un impact massique non négligeable.

Le brevet FR 2 967 132 B1 décrit un procédé d'optimisation de la consommation spécifique d'un hélicoptère ayant deux turbomoteurs. Selon ce procédé, les deux turbomoteurs fournissent des puissances sensiblement différentes. Un des turbomoteurs peut fonctionner en régime continu pendant que l'autre turbomoteur est mis en veille à puissance nulle et chambre de combustion éteinte tout en restant maintenu en rotation par un entrainement actif en vue d'un redémarrage fiabilisé. En cas d'échec d'un redémarrage conventionnel, le redémarrage peut être réalisé par une assistance d'urgence au travers d'une mise à feu complémentaire de la chambre de combustion. Cette mise à feu complémentaire peut être obtenue avec un dispositif à bougies à incandescence, à rayonnement laser ou un dispositif pyrotechnique.

Le Brevet FR 2 967 133 B1 décrit un procédé d'optimisation de la consommation spécifique d'un hélicoptère ayant deux turbomoteurs. Selon ce procédé, un des turbomoteurs peut fonctionner en régime continu pendant que l'autre turbomoteur fonctionne selon un régime de super ralenti à puissance nulle. En cas d'échec d'un redémarrage conventionnel, un redémarrage du turbomoteur au régime de super-ralenti peut être réalisé par une assistance d'urgence produite par une énergie autonome et dédiée à ce redémarrage.

Les documents EP 3 170 744 A1, EP 3 069 990, et EP 3 095 695 sont aussi connus.

Le document US 10481 615 B2 n'a pas trait à un mode de fonctionnement économique en décrivant un procédé et un système pour effectuer la transition d'un premier mode à un second mode lorsqu'une vitesse du giravion dépasse un premier seuil de vitesse. La transition entre les premier et second modes comprend l'atténuation d'un gain d'un contrôleur dynamique, et la diminution d'une valeur d'un intégrateur du contrôleur dynamique sur une seconde période de temps. Dans le premier mode, la vitesse d'avancement de l'aéronef est déterminée sur la base d'un signal émis à l'aide d'une commande, et dans le second mode, une sortie d'un contrôleur de taux d'attitude est proportionnelle à une amplitude de ce signal

La présente invention a alors pour objet de proposer un aéronef multimoteur alternatif visant à optimiser la consommation de carburant en vol.

L'invention vise ainsi un procédé de pilotage d'un aéronef à voilure tournante muni d'une installation motrice comprenant plusieurs moteurs mettant en mouvement ladite voilure tournante, ledit aéronef comprenant une interface homme-machine pilotant une chaîne de commande débouchant sur un organe de pilotage apte à agir sur une accélération longitudinale de l'aéronef, ledit aéronef comprenant un calculateur de pilotage, l'aéronef pouvant fonctionner selon un mode de fonctionnement économique durant lequel au moins un desdits plusieurs moteurs ne fournit pas une puissance mécanique à ladite voilure tournante et au moins un desdits plusieurs moteurs fournit une puissance mécanique à ladite voilure tournante.

Durant le mode de fonctionnement économique, le procédé comporte les étapes suivantes :
- mesure d'une vitesse d'avancement de l'aéronef,
- ajustement d'une autorité de ladite interface homme-machine sur ladite accélération longitudinale avec le calculateur de pilotage en fonction de la vitesse d'avancement.

Le mode de fonctionnement économique peut être déclenché par un pilote ou un copilote par manipulation d'une interface dédiée, voire automatiquement.

Dès lors, chaque moteur comporte une chambre de combustion et un arbre de travail apte à transmettre une puissance à la voilure tournante. Durant le mode de fonctionnement économique au moins un moteur est en veille à savoir ne produit pas une puissance mécanique mettant en mouvement la voilure tournante. Un moteur en veille peut être éteint ou au ralenti. Le terme « ralenti » désigne un régime durant lequel un organe mobile du moteur, distinct de l'arbre de travail, est mis en mouvement, la chambre de combustion étant allumée ou non.

Le moteur en veille peut alors avoir une chambre de combustion maintenue allumée pour mettre en mouvement un organe mobile du moteur sans pour autant fournir de puissance. Par exemple, un arbre d'un générateur de gaz d'un turbomoteur à turbine libre effectue une rotation à une vitesse de l'ordre de 20 à 80 pourcents de sa vitesse nominale, la turbine libre n'étant pas mise en mouvement par le turbomoteur.

Selon un autre exemple, le moteur en veille peut avoir une chambre de combustion éteinte, les organes mobiles du moteur étant immobiles ou un organe mobile étant mis en mouvement par un autre organe moteur, tel qu'une machine électrique. Sur un turbomoteur, un arbre d'un générateur de gaz peut être mis en mouvement par une machine électrique à une vitesse de l'ordre de 5 à 20 pourcents de sa vitesse nominale pour permettre de faciliter un redémarrage.

Dès lors, si le moteur est un turbomoteur à turbine libre, la turbine libre peut ne pas être mise en mouvement par le turbomoteur durant un mode en veille. Le générateur de gaz peut lui être aussi à l'arrêt ou en mouvement, sous l'effet de la combustion d'une faible quantité de carburant et/ou d'un entrainement via un moteur auxiliaire.

Durant le mode de fonctionnement économique, le calculateur de pilotage ajuste l'autorité de l'interface homme-machine en fonction de la vitesse d'avancement. L'autorité représente l'ordre extrême que peut donner l'interface homme-machine. Avec une interface homme-machine comprenant un organe mobile, un même déplacement de cet organe mobile entraîne des accélérations longitudinales différentes en présence de deux vitesses d'avancement de 100 noeuds et 150 noeuds par exemple. On rappelle qu'un noeud est égal à 1,852 kilomètre par heure. Par convention, une accélération longitudinale négative peut être une décélération longitudinale.

Pour mémoire, le mode de fonctionnement économique peut être mis en oeuvre dans une plage de vitesses d'avancement allant d'un seuil de vitesse minimal à un seuil de vitesse maximal.

Lorsque la vitesse d'avancement est très supérieure à la borne inférieure de cette plage de vitesses, l'autorité de l'interface homme-machine peut être maximisée. Lorsque l'interface homme-machine comporte par exemple un levier, le plus grand déplacement possible du levier induit une décélération longitudinale maximisée tendant à faire baisser rapidement la vitesse d'avancement de l'aéronef. En effet, dans ce cas de figure, le moteur en veille pourra si nécessaire être réactivé avant que la borne inférieure soit atteinte. A titre illustratif, une durée de 30 secondes peut être nécessaire pour réactiver un moteur.

Une telle réactivation peut consister à augmenter le débit du carburant alimentant le moteur concerné pour développer avec le moteur une puissance mécanique mémorisée et non nulle. La réactivation peut être réalisée en appliquant le procédé de démarrage du moteur. La réactivation consiste alors en un démarrage usuel, au moins un organe mobile du moteur réactivé n'étant pas nécessairement à l'arrêt à l'initiation du procédé de démarrage du moteur.

Par contre, lorsque la vitesse d'avancement est plus proche de la borne inférieure, le calculateur de pilotage réduit alors l'autorité de l'interface homme-machine pour garantir que le moteur en veille puisse être réactivé avant d'atteindre la borne inférieure quelle que soit la manipulation de l'interface homme-machine.

Par exemple, la capacité optimale de décélération de l'aéronef peut permettre d'atteindre, à une telle vitesse d'avancement, la borne inférieure en 15 secondes alors que le temps nécessaire pour réactiver le moteur est de 30 secondes. Dès lors, le calculateur de pilotage réduit l'autorité de l'interface homme-machine pour brider l'aéronef et réduire sa capacité de décélération. En raison de la réduction de l'autorité de l'interface homme-machine, l'aéronef peut atteindre la borne inférieure à l'issue d'une durée supérieure ou égale à 30 secondes.

Selon l'exemple précédent, le plus grand déplacement possible du levier induit une décélération plus faible que précédemment. La vitesse d'avancement baisse moins rapidement ce qui permet de garantir que le moteur en veille pourra si nécessaire être réactivé avant que la borne inférieure soit atteinte et avant l'application d'un régime de fonctionnement d'urgence.

Ainsi, ce procédé peut tendre à augmenter la durée pendant laquelle un moteur est en veille afin d'optimiser la consommation de carburant. Le procédé peut ainsi éviter de devoir déclencher des réactivations d'urgence de façon intempestive.

L'enveloppe de vol permettant l'utilisation du mode économique peut aussi être optimisée.

Le procédé peut de plus comporter une ou plusieurs des caractéristiques qui suivent, prises seules ou en combinaison.

Selon une possibilité, le calculateur de pilotage peut émettre un signal de pilotage transmis à au moins un organe à géométrie variable de la chaîne de commande.

Un tel organe à géométrie variable peut être un actionneur linéaire ou rotatif, un « guignol » à longueur variable ou autres.

Le procédé peut alors comporter l'étape suivante durant le mode de fonctionnement économique :
- sous condition que ladite vitesse d'avancement soit comprise entre un seuil de vitesse minimal et un seuil de vitesse maximal, ledit ajustement de l'autorité de ladite interface homme-machine sur ladite accélération longitudinale comporte une génération dudit signal de pilotage avec le calculateur de pilotage en fonction au moins de ladite vitesse d'avancement, voire d'un signal de commande émis par l'interface homme-machine.

Le calculateur de pilotage est configuré pour aussi prendre en considération la vitesse d'avancement afin de réduire si nécessaire l'autorité de l'interface homme-machine.

Au moins un des seuils de vitesse maximale et minimale est fixe ou variable en fonction d'au moins un paramètre de positionnement.

Le seuil de vitesse maximal et/ou le seuil de vitesse minimale peuvent être fixés, suite à des essais ou calculs par exemple.

Alternativement, le seuil de vitesse maximal et/ou le seuil de vitesse minimale peuvent être variables pour prendre en compte divers paramètres susceptibles d'influencer le fonctionnement des moteurs et la puissance nécessaire pour la tenue du cas de vol de l'aéronef.

Eventuellement, le mode de fonctionnement économique pouvant être mis en oeuvre dans une plage de vitesses d'avancement allant d'un seuil de vitesse minimal à un seuil de vitesse maximal, le procédé comporte les étapes suivantes durant le mode de fonctionnement économique :
- sous condition que ladite vitesse d'avancement soit comprise entre un seuil de vitesse intermédiaire et le seuil de vitesse maximal, le seuil de vitesse maximal étant supérieur au seuil de vitesse intermédiaire, ledit ajustement de l'autorité de ladite interface homme-machine sur ladite accélération longitudinale comporte une génération dudit signal de pilotage avec le calculateur de pilotage en fonction d'une première loi,
- sous condition que ladite vitesse d'avancement soit comprise entre le seuil de vitesse minimal et le seuil de vitesse intermédiaire, le seuil de vitesse minimal étant inférieur au seuil de vitesse intermédiaire, ledit ajustement de l'autorité de ladite interface homme-machine sur ladite accélération longitudinale comporte une génération dudit signal de pilotage avec le calculateur de pilotage en fonction d'une deuxième loi, ladite première loi conférant une dite autorité à l'interface homme-machine plus grande que la deuxième loi.

Chaque loi peut prendre la forme d'au moins une équation, d'un tableau de valeurs...

Le calculateur de pilotage applique une première loi mémorisée lorsque la vitesse d'avancement est supérieure au seuil de vitesse minimale, voire à un seuil de vitesse intermédiaire supérieur au seuil de vitesse minimale. Par contre, lorsque la vitesse d'avancement se rapproche du seuil de vitesse minimal, le calculateur de pilotage applique une deuxième loi limitant l'autorité de l'interface homme-machine.

Eventuellement, le procédé comporte une phase transitoire entre une phase d'utilisation de la première loi et une phase d'utilisation de la deuxième loi.

Cette possibilité peut permettre d'éviter que le pilote ressente le changement de loi.

Selon une possibilité compatible avec les précédentes, le seuil de vitesse intermédiaire peut être fixe ou variable en fonction d'au moins un paramètre de positionnement.

Par ailleurs, le paramètre de positionnement susceptible d'influencer un des seuils précités peut être une altitude-densité courante de l'aéronef.

Selon une possibilité compatible avec les précédentes, durant le mode de fonctionnement économique, sous condition que ladite vitesse d'avancement devienne inférieure à un seuil de vitesse de réactivation, le procédé peut comporter une réactivation dudit moteur ne fournissant pas une puissance mécanique à la voilure tournante afin de transmettre une puissance mécanique avec ce moteur.

Le seuil de vitesse de réactivation est supérieur au seuil de vitesse minimal. Le seuil de vitesse de réactivation est inférieur au seuil de vitesse maximal et au seuil de vitesse intermédiaire. Le seuil de vitesse de réactivation peut être fixe ou variable en fonction d'au moins un paramètre de fonctionnement.

Selon une possibilité compatible avec les précédentes, le procédé peut comporter une limitation par le calculateur de pilotage de ladite vitesse d'avancement maximale à un seuil de vitesse maximal.

Durant le mode de fonctionnement économique, le calculateur de pilotage peut agir sur l'aéronef pour ne pas dépasser une vitesse maximale induisant la réactivation du moteur initialement en veille.

Le mode de fonctionnement économique peut alors être désactivé pour réactiver ce moteur et atteindre des vitesses d'avancement de l'aéronef plus importantes.

Selon une possibilité compatible avec les précédentes, le procédé peut comporter une désactivation automatique dudit mode de fonctionnement économique sur commande du calculateur de pilotage lorsque ladite vitesse d'avancement est inférieure à un seuil de vitesse minimal.

Outre un procédé, l'invention se rapporte à un aéronef appliquant ce procédé.

Un tel aéronef est muni d'une voilure tournante et d'une installation motrice comprenant plusieurs moteurs mettant en mouvement ladite voilure tournante, ledit aéronef comprenant une interface homme-machine pilotant une chaîne de commande débouchant sur un organe de pilotage apte à agir sur une accélération longitudinale de l'aéronef, ledit aéronef comprenant un calculateur de pilotage, l'aéronef pouvant fonctionner selon un mode de fonctionnement économique durant lequel au moins un desdits plusieurs moteurs ne fournit pas une puissance mécanique à la voilure tournante et au moins un desdits plusieurs moteurs fournit une puissance mécanique à la voilure tournante.

L'aéronef comporte de plus un senseur de vitesse d'avancement, ledit calculateur de pilotage étant configuré pour appliquer le procédé selon l'invention.

L'aéronef peut comporter un organe à géométrie variable agissant sur une position de l'organe de pilotage, le calculateur de pilotage communiquant avec cet organe à géométrie variable.

L'invention et ses avantages apparaîtront avec plus de détails dans le cadre de la description qui suit avec des exemples donnés à titre illustratif en référence aux figures annexées qui représentent :
[Fig 1] la figure 1, une réalisation d'un aéronef selon l'invention,
[Fig 2] la figure 2, une réalisation d'un aéronef selon l'invention, et
[Fig 3] la figure 3, un diagramme explicitant le procédé de l'invention.

Les éléments présents dans plusieurs figures distinctes sont affectés d'une seule et même référence.

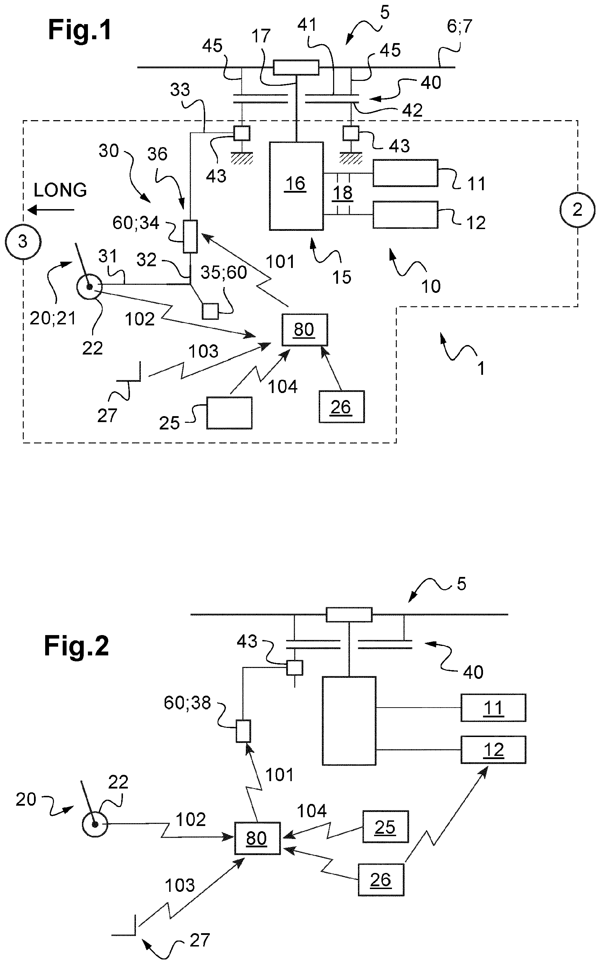

Les figures 1 et 2 présentent des réalisations d'un aéronef apte à mettre en oeuvre le procédé de l'invention.

Quelle que soit la réalisation et en référence par exemple à la figure 1, l'aéronef 1 selon l'invention peut comporter une cellule illustrée schématiquement avec des traits en pointillés. La cellule s'étend selon un axe longitudinal, et de l'arrière vers l'avant, d'une queue 2 vers un nez 3. Le terme « longitudinal » fait référence à une direction allant de la queue 2 vers le nez 3, selon une direction sensiblement parallèle à l'axe de roulis. L'expression « accélération longitudinale » est usuellement employée par l'homme du métier.

Cet aéronef 1 comporte une voilure tournante 5 munie de pales 6. Eventuellement, l'aéronef 1 peut comporter au moins un autre rotor non représenté, tel que par exemple un rotor latéral, un rotor arrière, une autre voilure tournante...

Pour mettre en mouvement notamment la voilure tournante 5 voire le ou les rotors, l'aéronef 1 comporte une installation motrice 10. Cette installation motrice comprend plusieurs moteurs 11, 12 pouvant chacun mettre en mouvement la voilure tournante 5. Les moteurs 11, 12 peuvent être pilotés par au moins un calculateur moteur non représenté. Par exemple, les moteurs 11, 12 sont tous mécaniquement reliés à la voilure tournante 5 par une chaîne de transmission de puissance 15. Une telle chaîne de transmission de puissance 15 peut comprendre un mât rotor 17 solidaire de la voilure tournante 5, une boîte de transmission de puissance 16 muni du mât rotor 17, au moins un arbre, et/ou au moins un moyen d'accouplement... Selon l'exemple illustré, chaque moteur 11, 12 comporte un arbre de puissance mettant en mouvement une boîte de transmission de puissance 16 via des connexions 18, la boîte de transmission de puissance comprenant un mât rotor 17. Sur un aéronef muni d'au moins un autre rotor, la boîte de transmission de puissance 16 ou autre peut être reliée à chaque rotor par des transmissions dédiées.

Pour piloter les évolutions de l'aéronef 1, cet aéronef 1 comprend une interface homme-machine 20. Une telle interface homme-machine peut comprendre un levier, un manche 21, un mini-manche, un bouton, une dalle tactile... Eventuellement, l'interface homme-machine 20 comporte un senseur 22 transmettant au moins un signal de commande 102 en fonction de la sollicitation de cette interface homme-machine 20.

Par exemple, l'interface homme-machine 20 comporte un manche 21 mobile en rotation autour de deux axes. Le senseur peut comprendre un capteur de position par axe, tel qu'un potentiomètre par exemple.

Le terme « signal » désigne un signal analogique ou numérique, électrique ou optique.

Cette interface homme-machine 20 coopère avec une chaîne de commande 30 débouchant sur un organe de pilotage 7 apte à agir sur l'accélération longitudinale de l'aéronef 1. Un tel organe de pilotage 7 peut par exemple prendre la forme d'une pale 6 de la voilure tournante 5 et/ou d'une pale d'un autre rotor et par exemple une hélice voire d'un volet le cas échéant.

La figure 1 illustre un exemple de commande de vol mécanique assisté usuel, et la figure 2 illustre un exemple de commande de vol électrique.

Selon la figure 1, l'interface homme-machine 20 est relié mécaniquement à une chaîne de commande mécanique 30. Cette chaîne de commande mécanique 30 peut comprendre une liaison mécanique 36 débouchant sur une ou plusieurs servocommandes 43. Cette liaison mécanique 36 peut posséder au moins un arbre 31, et/ou au moins un guignol 32, et/ou au moins un actionneur série 34, et/ou au moins un actionneur parallèle 35 dénommé usuellement « vérin de trim ». Chaque servocommande 43 est reliée à un plateau non tournant 42 d'un ensemble 40 de plateaux cycliques. Cet ensemble 40 de plateaux cycliques comprend de plus un plateau tournant 41 relié par des bielles 45 à des pales 6 respectives de la voilure tournante 5.

En pilotant le pas cyclique des pales 6 de la voilure tournante 5, l'interface homme-machine 20 permet de piloter l'accélération longitudinale de l'aéronef 1 de manière classique.

Selon une possibilité non illustrée l'interface homme-machine peut piloter collectivement le pas des pales de la voilure tournante et/ou d'au moins un des autres rotors à cet effet.

Selon la figure 2, la ou les servocommandes sont pilotées par au moins un actionneur de pilotage 38 commandé par un calculateur de pilotage 80. Le calculateur de pilotage 80 mémorise au moins une loi fournissant une consigne à transmettre à l'actionneur de pilotage 38 en fonction d'un signal de commande 102 émis par l'interface homme-machine 20.

Les figures 1 et 2 décrivent des exemples d'architectures indiquant comment une interface homme-machine 20 peut piloter l'accélération longitudinale de l'aéronef 1 en contrôlant des organes de pilotage. D'autres architectures sont envisageables sans sortir du cadre de l'invention revendiquée.

Quelle que soit cette architecture et en référence à la figure 2 par exemple, l'aéronef 1 comporte un calculateur de pilotage 80.

Le terme « calculateur » peut comprendre par exemple une ou plusieurs unités ayant chacune au moins un processeur et au moins une mémoire, au moins un circuit intégré, au moins un système programmable, au moins un circuit logique, ces exemples ne limitant pas la portée donnée au terme « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur... Plusieurs calculateurs décrits peuvent former un seul et même calculateur.

Le calculateur de pilotage 80 peut être un calculateur d'un système connu sous l'acronyme « AFCS » et l'expression anglaise « Aircraft Flight Control System ».

Le cas échéant, le calculateur de pilotage 80 peut être relié, par une liaison filaire ou non filaire, à l'interface homme-machine 20 pour recevoir le signal de commande 102.

Le calculateur de pilotage 80 peut être relié, par une liaison filaire ou non filaire, à un senseur 27 de vitesse d'avancement mesurant une vitesse d'avancement V de l'aéronef 1. Par exemple, la vitesse d'avancement peut être la vitesse vraie dite aussi « True air speed » en langue anglaise, la vitesse air ou autres. Un tel senseur 27 de vitesse d'avancement peut comprendre un système à tube de Pitot, un système de positionnement par satellites... Le senseur 27 de vitesse d'avancement transmet un signal de vitesse 103 porteur de la vitesse d'avancement V au calculateur de pilotage 80.

Le calculateur de pilotage 80 peut être relié, par une liaison filaire ou non filaire, a au moins un senseur 25 de positionnement. Chaque senseur 25 de positionnement émet un signal de positionnement transmis au calculateur de pilotage 80. Par exemple, un senseur 25 de positionnement mesure une altitude-densité, ce senseur 25 comprenant par exemple un capteur de température et un capteur de pression. Le senseur 25 de positionnement transmet un signal de positionnement 104 porteur de la valeur du paramètre de positionnement au calculateur de pilotage 80.

L'aéronef 1 peut fonctionner selon un mode de fonctionnement économique. Durant un tel mode de fonctionnement économique et au moins dans un intervalle de vitesses, au moins un moteur 11 ou 12 est en fonctionnement en produisant une puissance mécanique afin de mettre en mouvement la voilure tournante 5. De plus, au moins un moteur 11 ou 12 est en veille. Un moteur en veille ne fournit pas de puissance mécanique afin de mettre en mouvement la voilure tournante 5. Le moteur en veille est soit arrêté, soit au ralenti. Par exemple les moteurs 11 et 12 sont des turbomoteurs à turbine libre.

La turbine libre d'un turbomoteur en veille est à l'arrêt ou seulement mise en mouvement sous l'effet du flux d'air qui traverse le moteur induit par l'avancement de l'aéronef. Dans ce cas, ce n'est pas le moteur en tant que tel qui met en mouvement la turbine libre. L'expression « mode de fonctionnement économique durant lequel au moins un desdits plusieurs moteurs ne fournit pas une puissance mécanique à ladite voilure tournante » signifie que le moteur en tant que tel ne met pas en rotation son arbre de sortie relié à la voilure tournante, cet arbre de sortie pouvant être mis en mouvement sous l'effet du vent.

Un arbre du générateur de gaz d'un turbomoteur en veille est aussi à l'arrêt ou effectue une rotation à une vitesse réduite, sous l'impulsion d'un organe moteur auxiliaire ou d'une faible combustion de carburant, voire du vent. L'intervalle de vitesses peut par exemple aller d'un seuil de réactivation à un seuil de vitesse maximal évoques par la suite.

Par exemple, l'aéronef 1 peut comporter une commande 26 manoeuvrable par un pilote pour requérir la mise en oeuvre du mode de fonctionnement économique. La commande 26 émet un signal de fonctionnement transmis à un calculateur pour mettre en veille au moins un moteur 11 ou 12. Par exemple, le signal de fonctionnement est transmis à un calculateur moteur. Le calculateur de pilotage 80 peut aussi recevoir le signal de fonctionnement.

Dès lors, durant le mode de fonctionnement économique, le calculateur de pilotage est configuré pour appliquer le procédé de l'invention. En particulier, le calculateur de pilotage est configuré pour piloter un organe à géométrie variable 60 agissant sur une position de l'organe de pilotage 7 en fonction de la vitesse d'avancement V. Dès lors, le calculateur de pilotage 80 est configuré pour transmettre un signal de pilotage à au moins un organe à géométrie variable 60. Un tel organe à géométrie variable 60 peut être un guignol 32 à géométrie variable, un actionneur série 34, un actionneur parallèle 35, un actionneur de pilotage 38. L'expression « organe à géométrie variable » désigne tout organe capable d'être géométriquement modifié pour limiter l'autorité de l'interface homme machine 20.

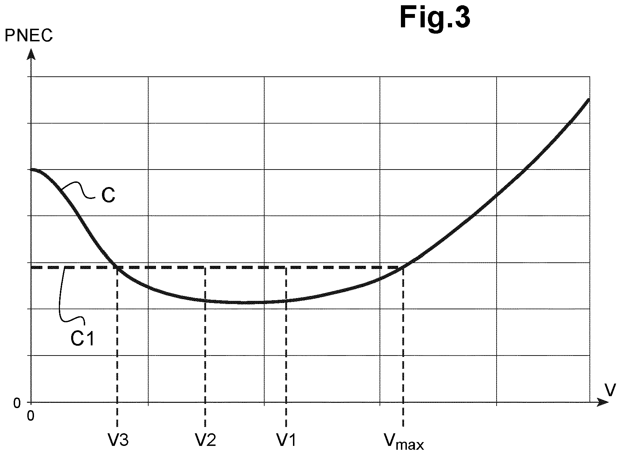

La figure 3 présente un diagramme illustrant le procédé de l'invention. Ce diagramme présente en abscisse la vitesse d'avancement V et en ordonnée une puissance.

La courbe C illustre une puissance nécessaire PNEC à fournir pour mettre en mouvement les divers organes requis à chaque instant. A partir d'une vitesse d'avancement nulle, la puissance nécessaire PNEC décroit au fur et à mesure de l'augmentation de la vitesse d'avancement V jusqu'à une zone minimale puis augmente. L'installation motrice et notamment les moteurs 11, 12 sont dimensionnés pour pouvoir fournir la puissance nécessaire PNEC requise à chaque instant.

Un trait horizontal C1 illustre une puissance pouvant être fournie par un seul des moteurs. Par exemple, cette puissance est égale ou inférieure à la puissance maximale continue que peut fournir le moteur, par exemple de l'ordre d'un pourcentage prédéterminé de la puissance maximale continue. Une telle puissance maximale continue est connue sous l'acronyme PMC. Ce niveau de puissance illustré par le trait horizontal C1 est un compromis entre l'impact de la puissance développée par le moteur sur son endommagement et le gain de consommation obtenu.

Dès lors, lorsque la puissance nécessaire est située sur ce trait C1 ou en dessous de ce trait C1, au moins un moteur peut être mis en veille.

Durant le mode de fonctionnement économique, le procédé comporte la mesure d'une vitesse d'avancement V de l'aéronef 1. Le senseur 27 de vitesse d'avancement transmet un signal de vitesse 103 au calculateur de pilotage 80.

Dès lors, le calculateur de pilotage 80 est configuré pour effectuer un ajustement de l'autorité de l'interface homme-machine 20 sur l'accélération longitudinale en fonction de la vitesse d'avancement V.

Par exemple, le calculateur de pilotage 80 peut émettre un signal de pilotage 101, transmis à au moins un organe à géométrie variable 60 pour réduire cette autorité.

Eventuellement, le signal de pilotage 101 peut aussi dépendre du signal de commande 102 émis par ladite interface homme-machine 20, au moins dans le cadre d'une architecture à commande de vol électrique.

En particulier, lorsque la vitesse d'avancement V est comprise entre un seuil de vitesse minimal V3 et un seuil de vitesse maximal Vmax, l'ajustement de l'autorité de l'interface homme-machine 20 est obtenu en générant le signal de pilotage 101 en fonction de la vitesse d'avancement V. Le calculateur de pilotage est alors configuré pour comparer la vitesse d'avancement V aux différents seuils évoqués.

Par exemple, le seuil de vitesse minimal V3 est de l'ordre de 80 noeuds, le seuil de vitesse maximal Vmax étant de l'ordre de 160 noeuds. Le seuil de vitesse minimal V3 et le seuil de vitesse maximal Vmax sont positionnés aux intersections de la courbe C de puissance nécessaire PNEC et du trait C1.

Dans la plage de vitesses d'avancement allant du seuil de vitesse minimal V3 au seuil de vitesse maximal Vmax, un moteur peut en effet être en veille voire dans une phase de réactivation.

Au moins un des seuil de vitesse maximal Vmax et seuil de vitesse minimal V3 peut être fixe.

Au moins un des seuil de vitesse maximal Vmax et seuil de vitesse minimal V3 peut être variable en fonction d'au moins un paramètre de positionnement. Dès lors, le calculateur de pilotage 80 est configuré pour déterminer le seuil concerné en fonction de la valeur du paramètre de positionnement. Par exemple, le calculateur de pilotage mémorise un tableau ou une équation donnant la valeur d'un seuil en fonction de la valeur du ou des paramètres de positionnement. Les seuils de vitesse intermédiaire et de réactivation évoqués par la suite peuvent aussi être fixes ou variables en fonction d'au moins un paramètre de positionnement.

Plus précisément, lorsque la vitesse d'avancement V courante est comprise entre un seuil de vitesse intermédiaire V1, par exemple de l'ordre de 110 noeuds, et le seuil de vitesse maximal Vmax, le calculateur de pilotage 80 peut générer le signal de pilotage 101 avec le calculateur de pilotage 80 en fonction d'une première loi.

Lorsque la vitesse d'avancement V courante est comprise entre le seuil de vitesse minimal V3 et le seuil de vitesse intermédiaire V1, le calculateur de pilotage 80 peut générer le signal de pilotage 101 avec le calculateur de pilotage 80 en fonction d'une deuxième loi.

La première loi confère une autorité à l'interface homme-machine 20 plus grande que l'autorité obtenue avec la deuxième loi.

Chaque loi peut générer le signal de pilotage en fonction de divers paramètres, par exemple en fonction du signal de commande voire d'autres paramètres dépendant du mode de pilotage. Selon la figure 1, un actionneur série est usuellement piloté pour stabiliser l'aéronef et peut être ainsi piloté. La loi utilisée selon l'invention tend aussi à limiter l'autorité de l'interface homme-machine 20. L'ordre donné par l'interface homme-machine 20 peut être retranscrit tel quel par la première loi et peut être minoré par la deuxième loi. Par exemple, la première loi et la deuxième loi comportent un gain. La première loi et la deuxième loi sont alors identiques au gain près.

A titre d'exemple basique, si l'interface homme-machine 20 est manoeuvrée pour déplacer en translation un arbre d'un centimètre, la deuxième loi peut agir sur un actionneur pour que cet arbre soit déplacé d'une distance inférieure à ce centimètre.

Selon un autre exemple, la première loi peut appliquer l'ordre porté par le signal de commande. Par contre, la deuxième loi peut minorer cet ordre, par exemple en le divisant par un coefficient prédéterminé.

A titre illustratif, la première loi et la deuxième loi prennent la forme suivante : S=G*D, où « S » représente le signal de commande, « G » représente un gain » et « D » représente un déplacement de l'interface homme-machine. G peut être égal à la valeur 1 avec la première loi et à la valeur 0,5 avec la deuxième loi.

Le calculateur de pilotage 80 peut, par ailleurs, être configuré pour appliquer une phase transitoire entre une phase d'utilisation de la première loi et une phase d'utilisation de la deuxième loi. Par exemple une loi intermédiaire peut être appliquée pendant un temps prédéterminé lors du passage de la première loi à la deuxième loi et inversement.

Eventuellement, lorsque la vitesse d'avancement V devient inférieure à un seuil de vitesse de réactivation V2, par exemple de l'ordre de 100 noeuds, le procédé peut comporter une réactivation du moteur en veille afin de produire une puissance mécanique avec ce moteur. La réactivation peut être réalisée selon une procédure de démarrage usuelle. Autrement dit, le calculateur de pilotage transmet un signal, par exemple à un calculateur moteur, qui redémarre le moteur selon le procédé mémorisé, par exemple, en modifiant le débit de carburant.

Lorsque la vitesse d'avancement V devient inférieure au seuil de vitesse minimal V3, le procédé comporte une désactivation automatique du mode de fonctionnement économique sur commande du calculateur de pilotage 80. Le calculateur de pilotage 80 peut transmettre un signal d'arrêt du mode aux calculateurs moteurs voire à un alerteur. L'alerteur génère une alerte pour en informer l'équipage. L'alerteur peut comprendre un écran, un système acoustique, un système tactile...

A l'inverse, le procédé peut comporter une limitation par le calculateur de pilotage 80 de la vitesse d'avancement V à un seuil de vitesse maximal.

Le calculateur de pilotage est configuré pour piloter au moins un organe à géométrie variable afin de maintenir la vitesse d'avancement dans la plage permettant de maintenir un moteur en veille. Une telle limitation de vitesse peut être obtenue de manière usuelle.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé de pilotage d'un aéronef (1) à voilure tournante (5) muni d'une installation motrice (10) comprenant plusieurs moteurs (11, 12) mettant en mouvement ladite voilure tournante (5), ledit aéronef (1) comprenant une interface homme-machine (20) pilotant une chaîne de commande (30) débouchant sur un organe de pilotage (7) apte à agir sur une accélération longitudinale de l'aéronef (1), ledit aéronef (1) comprenant un calculateur de pilotage (80), l'aéronef (1) pouvant fonctionner selon un mode de fonctionnement économique durant lequel au moins un desdits plusieurs moteurs (11, 12) ne fournit pas une puissance mécanique à ladite voilure tournante et au moins un desdits plusieurs moteurs (11, 12) fournit une puissance mécanique à ladite voilure tournante,
**caractérisé en ce que** durant le mode de fonctionnement économique, le procédé comporte les étapes suivantes :
- mesure d'une vitesse d'avancement (V) de l'aéronef (1),
- ajustement d'une autorité de ladite interface homme-machine (20) sur ladite accélération longitudinale avec le calculateur de pilotage (80) en fonction de la vitesse d'avancement (V).

2. Procédé selon la revendication 1,
**caractérisé en ce que** ledit calculateur de pilotage (80) émet un signal de pilotage (101) transmis à au moins un organe à géométrie variable (60) de la chaîne de commande (30), le procédé comporte l'étape suivante durant le mode de fonctionnement économique :
- sous condition que ladite vitesse d'avancement (V) soit comprise entre un seuil de vitesse minimal (V3) et un seuil de vitesse maximal (Vmax), ledit ajustement de l'autorité de ladite interface homme-machine (20) sur ladite accélération longitudinale comporte une génération dudit signal de pilotage (101) avec le calculateur de pilotage (80) en fonction de ladite vitesse d'avancement (V).

3. Procédé selon la revendication 2,
**caractérisé en ce qu'**au moins un des seuil de vitesse maximal (Vmax) et seuil de vitesse minimal (V3) est fixe ou variable en fonction d'au moins un paramètre de positionnement.

4. Procédé selon l'une quelconque des revendications 2 à 3, **caractérisé en ce que** le mode de fonctionnement économique étant mis en oeuvre dans une plage de vitesses d'avancement allant d'un seuil de vitesse minimal à un seuil de vitesse maximal, le procédé comporte les étapes suivantes durant le mode de fonctionnement économique :
- sous condition que ladite vitesse d'avancement (V) soit comprise entre un seuil de vitesse intermédiaire (V1) et le seuil de vitesse maximal (Vmax), le seuil de vitesse maximal (Vmax) étant supérieur au seuil de vitesse intermédiaire (V1), ledit ajustement de l'autorité de ladite interface homme-machine (20) sur ladite accélération longitudinale comporte une génération dudit signal de pilotage (101) avec le calculateur de pilotage (80) en fonction d'une première loi,
- sous condition que ladite vitesse d'avancement (V) soit comprise entre le seuil de vitesse minimal (V3) et le seuil de vitesse intermédiaire (V1), le seuil de vitesse minimal (V3) étant inférieur au seuil de vitesse intermédiaire (V1), ledit ajustement de l'autorité de ladite interface homme-machine (20) sur ladite accélération longitudinale comporte une génération dudit signal de pilotage (101) avec le calculateur de pilotage (80) en fonction d'une deuxième loi, ladite première loi conférant une dite autorité à l'interface homme-machine (20) plus grande que la deuxième loi.

5. Procédé selon la revendication 4,
**caractérisé en ce que** le procédé comporte une phase transitoire entre une phase d'utilisation de la première loi et une phase d'utilisation de la deuxième loi.

6. Procédé selon l'une quelconque des revendications 4 à 5,
**caractérisé en ce que** ledit seuil de vitesse intermédiaire (V1) est fixe ou variable en fonction d'au moins un paramètre de positionnement.

7. Procédé selon l'une quelconque des revendications 3 ou 6,
**caractérisé en ce que** ledit paramètre de positionnement est une altitude-densité courante de l'aéronef (1).

8. Procédé selon l'une quelconque des revendications 1 à 7,
**caractérisé en ce que** durant le mode de fonctionnement économique, sous condition que ladite vitesse d'avancement (V) devienne inférieure à un seuil de vitesse de réactivation (V2), le procédé comporte une réactivation dudit moteur (11) ne fournissant pas une puissance mécanique à la voilure tournante afin de transmettre une puissance mécanique avec ce moteur (11).

9. Procédé selon l'une quelconque des revendications 1 à 8,
**caractérisé en ce que** le procédé comporte une limitation par le calculateur de pilotage (80) de ladite vitesse d'avancement (V) à un seuil de vitesse maximal.

10. Procédé selon l'une quelconque des revendications 1 à 9,
**caractérisé en ce que** le procédé comporte une désactivation automatique dudit mode de fonctionnement économique sur commande du calculateur de pilotage (80) lorsque ladite vitesse d'avancement (V) est inférieure à un seuil de vitesse minimal (V3).

11. Aéronef (1) muni d'une voilure tournante (5) et d'une installation motrice (10) comprenant plusieurs moteurs (11, 12) mettant en mouvement ladite voilure tournante (5), ledit aéronef (1) comprenant une interface homme-machine (20) pilotant une chaîne de commande (30) débouchant sur un organe de pilotage (7) apte à agir sur une accélération longitudinale de l'aéronef (1), ledit aéronef (1) comprenant un calculateur de pilotage (80), l'aéronef (1) pouvant fonctionner selon un mode de fonctionnement économique durant lequel au moins un desdits plusieurs moteurs (11, 12) ne fournit pas une puissance mécanique à la voilure tournante et au moins un desdits plusieurs moteurs (11, 12) fournit une puissance mécanique à la voilure tournante,
**caractérisé en ce que** ledit aéronef (1) comporte un senseur (27) de vitesse d'avancement, ledit calculateur de pilotage (80) étant configuré pour appliquer le procédé selon l'une quelconque des revendications 1 à 10.

12. Aéronef selon la revendication 11,
**caractérisé en ce que** ledit aéronef (1) comporte un organe à géométrie variable (60) agissant sur une position dudit organe de pilotage (7), ledit calculateur de pilotage (80) étant configuré pour modifier une géométrie dudit organe à géométrie variable (60).

## Patentansprüche

1. Verfahren zum Steuern eines Luftfahrzeugs (1) mit Drehflügel (5), das mit einer Antriebsanlage (10) versehen ist, die mehrere Motoren (11, 12) umfasst, die den Drehflügel (5) in Bewegung setzen, wobei das Luftfahrzeug (1) eine Mensch-Maschine-Schnittstelle (20) umfasst, die eine Steuerkette (30) steuert, die in ein Steuerorgan (7) mündet, das in der Lage ist, auf eine Längsbeschleunigung des Luftfahrzeugs (1) einzuwirken, wobei das Luftfahrzeug (1) einen Steuerrechner (80) umfasst, wobei das Luftfahrzeug (1) in einem Sparmodus betreibbar ist, in dem mindestens einer der mehreren Motoren (11, 12) keine mechanische Leistung an den Drehflügel abgibt und mindestens einer der mehreren Motoren (11, 12) eine mechanische Leistung an den Drehflügel abgibt,
**dadurch gekennzeichnet, dass** während des Sparmodus das Verfahren die folgenden Schritte umfasst:
- Messen einer Fortbewegungsgeschwindigkeit (V) des Luftfahrzeugs (1),
- Anpassen einer Autorität der Mensch-Maschine-Schnittstelle (20) über die Längsbeschleunigung mit dem Steuerrechner (80) in Abhängigkeit von der Fortbewegungsgeschwindigkeit (V).

2. Verfahren nach Anspruch 1,
**dadurch gekennzeichnet, dass** der Steuerrechner (80) ein Steuersignal (101) ausgibt, das an mindestens ein Organ mit variabler Geometrie (60) der Steuerkette (30) übertragen wird, wobei das Verfahren während des Sparmodus den folgenden Schritt umfasst:
- unter der Bedingung, dass die Fortbewegungsgeschwindigkeit (V) zwischen einer Mindestgeschwindigkeitsschwelle (V3) und einer Höchstgeschwindigkeitsschwelle (Vmax) liegt, umfasst das Anpassen der Autorität der Mensch-Maschine-Schnittstelle (20) über die Längsbeschleunigung ein Erzeugen des Steuersignals (101) mit dem Steuerrechner (80) in Abhängigkeit von der Fortbewegungsgeschwindigkeit (V).

3. Verfahren nach Anspruch 2,
**dadurch gekennzeichnet, dass** die Höchstgeschwindigkeitsschwelle (Vmax) und/oder die Mindestgeschwindigkeitsschwelle (V3) fest oder in Abhängigkeit von mindestens einem Positionsparameter variabel ist.

4. Verfahren nach einem der Ansprüche 2 bis 3,
**dadurch gekennzeichnet, dass** der Sparbetrieb in einem Fortbewegungsgeschwindigkeitsbereich von einer Mindestgeschwindigkeitsschwelle bis zu einer Höchstgeschwindigkeitsschwelle durchgeführt wird, und dass das Verfahren während des Sparbetriebs folgende Schritte umfasst:
- unter der Bedingung, dass die Fortbewegungsgeschwindigkeit (V) zwischen einer intermediären Geschwindigkeitsschwelle (V1) und der Höchstgeschwindigkeitsschwelle (Vmax) liegt, wobei die Höchstgeschwindigkeitsschwelle (Vmax) größer ist als die intermediäre Geschwindigkeitsschwelle (V1), umfasst das Anpassen der Autorität der Mensch-Maschine-Schnittstelle (20) über die Längsbeschleunigung ein Erzeugen des Steuersignals (101) mit dem Steuerrechner (80) in Abhängigkeit von einer ersten Regel,
- unter der Bedingung, dass die Fortbewegungsgeschwindigkeit (V) zwischen der Mindestgeschwindigkeitsschwelle (V3) und der intermediären Geschwindigkeitsschwelle (V1) liegt, wobei die Mindestgeschwindigkeitsschwelle (V3) niedriger als die intermediäre Geschwindigkeitsschwelle (V1) ist, umfasst das Anpassen der Autorität der Mensch-Maschine-Schnittstelle (20) über die Längsbeschleunigung ein Erzeugen des Steuersignals (101) mit dem Steuerrechner (80) in Abhängigkeit von einer zweiten Regel, wobei die der Mensch-Maschine-Schnittstelle (20) von der ersten Regel verliehene Autorität höher als die von der zweiten Regel verliehene ist.

5. Verfahren nach Anspruch 4,
**dadurch gekennzeichnet, dass** das Verfahren eine Übergangsphase zwischen einer Phase der Verwendung der ersten Regel und einer Phase der Verwendung der zweiten Regel umfasst.

6. Verfahren nach einem der Ansprüche 4 bis 5,
**dadurch gekennzeichnet, dass** die intermediäre Geschwindigkeitsschwelle (V1) fest oder in Abhängigkeit von mindestens einem Positionsparameter variabel ist.

7. Verfahren nach einem der Ansprüche 3 oder 6,
**dadurch gekennzeichnet, dass** der Positionsparameter eine aktuelle Höhe-Dichte des Luftfahrzeugs (1) ist.

8. Verfahren nach einem der Ansprüche 1 bis 7,
**dadurch gekennzeichnet, dass** während des Sparmodus, unter der Bedingung, dass die Fortbewegungsgeschwindigkeit (V) unter eine Reaktivierungsgeschwindigkeitsschwelle (V2) fällt, das Verfahren eine Reaktivierung des Motors (11), der keine mechanische Leistung an den Drehflügel liefert, umfasst, um mit diesem Motor (11) mechanische Leistung zu übertragen.

9. Verfahren nach einem der Ansprüche 1 bis 8,
**dadurch gekennzeichnet, dass** das Verfahren eine Begrenzung der Fortbewegungsgeschwindigkeit (V) durch den Steuerrechner (80) auf eine Höchstgeschwindigkeitsschwelle umfasst.

10. Verfahren nach einem der Ansprüche 1 bis 9,
**dadurch gekennzeichnet, dass** das Verfahren eine automatische Deaktivierung des Sparmodus auf Befehl des Steuerrechners (80) umfasst, wenn die Fortbewegungsgeschwindigkeit (V) unterhalb einer Mindestgeschwindigkeitsschwelle (V3) liegt.

11. Luftfahrzeug (1) mit einem Drehflügel (5) und einer Antriebsanlage (10) mit mehreren Motoren (11, 12), die den Drehflügel (5) in Bewegung setzen, wobei das Luftfahrzeug (1) eine Mensch-Maschine-Schnittstelle (20) umfasst, die eine Steuerkette (30) steuert, die in ein Steuerorgan (7) mündet, das in der Lage ist, auf eine Längsbeschleunigung des Luftfahrzeugs (1) einzuwirken, wobei das Luftfahrzeug (1) einen Steuerrechner (80) umfasst, wobei das Luftfahrzeug (1) in einem Sparmodus betreibbar ist, in dem mindestens einer der mehreren Motoren (11, 12) keine mechanische Leistung an den Drehflügel abgibt und mindestens einer der mehreren Motoren (11, 12) eine mechanische Leistung an den Drehflügel abgibt,
**dadurch gekennzeichnet, dass** das Luftfahrzeug (1) einen Fortbewegungsgeschwindigkeitssensor (27) aufweist und der Steuerrechner (80) konfiguriert ist, um das Verfahren nach einem der Ansprüche 1 bis 10 anzuwenden.

12. Luftfahrzeug nach Anspruch 11,
**dadurch gekennzeichnet, dass** das Luftfahrzeug (1) ein Organ mit variabler Geometrie (60) umfasst, das auf eine Position des Steuerorgans (7) einwirkt, wobei der Steuerrechner (80) konfiguriert ist, um eine Geometrie des Organs mit variabler Geometrie (60) zu ändern.

## Claims

1. A method for controlling a rotary wing (5) aircraft (1) provided with an engine installation (10) comprising a plurality of engines (11, 12) moving said rotary wing (5), said aircraft (1) comprising a human-machine interface (20) controlling a command chain (30) opening onto a control member (7) suitable for acting on a longitudinal acceleration of the aircraft (1), said aircraft (1) comprising a control computer (80), the aircraft (1) being able to operate in an economical operating mode during which at least one of said plurality of engines (11, 12) does not provide mechanical power to said rotary wing and at least one of said plurality of engines (11, 12) provides mechanical power to said rotary wing,
**characterized in that** during the economical operating mode, the method comprises the following steps:
- measuring a forward speed (V) of the aircraft (1),
- adjusting an authority of said human-machine interface (20) on said longitudinal acceleration with the control computer (80) as a function of the forward speed (V).

2. The method according to claim 1,
**characterized in that** said control computer (80) emits a control signal (101) transmitted to at least one variable-geometry member (60) of the command chain (30), the method comprises the following step during the economical operating mode:
- under the condition that said forward speed (V) is between a minimum speed threshold (V3) and a maximum speed threshold (Vmax), said adjusting of the authority of said human-machine interface (20) on said longitudinal acceleration comprises a generating of said control signal (101) with the control computer (80) as a function of said forward speed (V).

3. The method according to claim 2,
**characterized in that** at least one of the maximum speed threshold (Vmax) and minimum speed threshold (V3) is fixed or variable as a function of at least one positioning parameter.

4. The method according to any of claims 2 to 3,
**characterized in that** the economical operating mode being implemented in a range of forward speeds from a minimum speed threshold to a maximum speed threshold, the method comprises the following steps during the economical operating mode:
- under the condition that said forward speed (V) is between an intermediate speed threshold (V1) and the maximum speed threshold (Vmax), the maximum speed threshold (Vmax) being greater than the intermediate speed threshold (V1), said adjustment of the authority of said human-machine interface (20) on said longitudinal acceleration comprises a generating of said control signal (101) with the control computer (80) as a function of a first law,
- under the condition that said forward speed (V) is between the minimum speed threshold (V3) and the intermediate speed threshold (V1), the minimum speed threshold (V3) being less than the intermediate speed threshold (V1), said adjustment of the authority of said human-machine interface (20) on said longitudinal acceleration comprises a generating of said control signal (101) with the control computer (80) as a function of a second law, said first law conferring a said authority to the human-machine interface (20) that is greater than the second law.

5. The method according to claim 4,
**characterized in that** the method comprises a transient phase between a phase of using the first law and a phase of using the second law.

6. The method according to any of claims 4 to 5,
**characterized in that** said intermediate speed threshold (V1) is fixed or variable as a function of at least one positioning parameter.

7. The method according to any of claims 3 or 6,
**characterized in that** said positioning parameter is a current altitude-density of the aircraft (1).

8. The method according to any of claims 1 to 7,
**characterized in that** during the economical operating mode, under the condition that said forward speed (V) becomes lower than a reactivation speed threshold (V2), the method comprises a reactivation of said motor (11) not providing a mechanical power to the rotary wing in order to transmit a mechanical power with this motor (11).

9. The method according to any of claims 1 to 8,
**characterized in that** the method comprises a limiting by the control computer (80) of said forward speed (V) to a maximum speed threshold.

10. The method according to any of claims 1 to 9,
**characterized in that** the method comprises an automatic deactivation of said economical operating mode on the command of the control computer (80) when said forward speed (V) is less than a minimum speed threshold (V3).

11. A rotary wing (5) aircraft (1) provided with an engine installation (10) comprising a plurality of engines (11, 12) moving said rotary wing (5), said aircraft (1) comprising a human-machine interface (20) controlling a command chain (30) opening onto a control member (7) suitable for acting on a longitudinal acceleration of the aircraft (1), said aircraft (1) comprising a control computer (80), the aircraft (1) being able to operate in an economical operating mode during which at least one of said plurality of engines (11, 12) does not provide mechanical power to the rotary wing and at least one of said plurality of engines (11, 12) provides mechanical power to the rotary wing,
**characterized in that** said aircraft (1) comprises a forward speed sensor (27), said control computer (80) being configured to apply the method according to any of claims 1 to 10.

12. An aircraft according to claim 11,
**characterized in that** said aircraft (1) comprises a variable-geometry member (60) acting on a position of said control member (7), said control computer (80) being configured to modify a geometry of said variable-geometry member (60).
